# EUROPÄISCHE PATENTANMELDUNG

(11) **EP 4 811 401 A1**
(43) Veröffentlichungstag der Anmeldung: **23.09.2026**
(21) Anmeldenummer: 26159293.5
(22) Anmeldetag: 18.02.2026
(51) Int. Cl.: H01F 7/18

(54) **VERFAHREN ZUR FEHLERERKENNUNG FÜR EINE VENTILANORDNUNG AUS MEHREREN MAGNETVENTILEN IN EINEM FAHRZEUG**

(30) Priorität: 18.03.2025 DE 102025110360
(71) Anmelder: AUMOVIO Germany GmbH, 60488 Frankfurt am Main (DE)
(72) Erfinder: Löffler, Christoph, 60488 Frankfurt am Main (DE)
(74) Vertreter: Aumovio Corporation

(57) **Zusammenfassung**

Verfahren zur Fehlererkennung für eine Ventilanordnung aus mehreren Magnetventilen in einem Fahrzeug
Die Erfindung betrifft ein Verfahren zur Fehlererkennung für eine Ventilanordnung aus mehreren Magnetventilen in einem Fahrzeug. Die Ventilanordnung umfasst zumindest zwei Magnetventile. Jedes Magnetventil weist eine Ventilspule mit einem Ventilspulenwiderstand auf. Die Ventilanordnung ist mit einer Steuereinheit zur Steuerung der Magnetventile signaltechnisch verbunden. Das Verfahren weist folgende Schritte auf:
a. Ermitteln des Ventilspulenwiderstandes (10) für jede Ventilspule der zumindest zwei Magnetventile der Ventilanordnung,
b. Vergleichen des Ventilspulenwiderstandes (12) des ersten Magnetventils mit einem Referenzwert, wobei der Referenzwert aus zumindest einem der ermittelten Ventilspulenwiderstände gebildet wird, und
c. Erkennen eines fehlerhaften Magnetventils (14) mittels der Steuereinheit, wenn eine Differenz zwischen dem Ventilspulenwiderstandes des zu prüfenden ersten Magnetventils zu dem Referenzwert einen Schwellwert überschreitet.

## Beschreibung

Die Erfindung betrifft ein Verfahren zur Fehlererkennung für eine Ventilanordnung aus mehreren Magnetventilen in einem Fahrzeug.

Elektrische Magnetventile werden seit Jahrzehnten im Fahrzeugbau bekannt und finden bei Bremssystemen sowie in der Fahrwerkssteuerung, beispielsweise zur Adaption des Dämpfverhaltens, Anwendung.

Magnetventile sind eine induktive Last in einer elektrischen Schaltung, welche auf eine Spannungsänderung verzögert reagiert und insbesondere auch bei Abschaltung der Versorgungsspannung das bekannte Nachlaufverhalten und das Induzieren einer Gegenspannung aufweist.

Weiterhin ist zu berücksichtigen, dass das Magnetventil oft in einer hochdynamischen Arbeitsumgebung eingesetzt wird, welche zum einen ein schnelles Erreichen und Halten einer Soll-Position des Magnetventils erfordert und zum anderen erheblichen schwankenden Belastungen durch das ventilgesteuerte Arbeitsmedium ausgesetzt ist, sodass das Magnetventil durch diese Veränderungen im Arbeitsmedium hervorgerufene Impulsen ausgesetzt ist, welche wiederum durch die elektrische Ansteuerung ausgeglichen werden müssen.

Die Aufgabe der Erfindung ist es, ein Verfahren zur Fehlererkennung für eine Ventilanordnung aus mehreren Magnetventilen in einem Fahrzeug bereitzustellen, welches zum einen kostengünstig und zum anderen ein Prüfen der Funktionalität der Magnetventile nach dem Einbau in ein Fahrzeug erfolgen kann.

Zur Lösung der Aufgabe wird ein Verfahren zur Fehlererkennung für eine Ventilanordnung aus mehreren Magnetventilen in einem Fahrzeug vorgesehen. Die Ventilanordnung umfasst zumindest zwei Magnetventile. Jedes Magnetventil weist eine Ventilspule mit einem Ventilspulenwiderstand auf. Die Ventilanordnung ist mit einer Steuereinheit zur Steuerung der Magnetventile signaltechnisch verbunden. Das Verfahren weist folgende Schritte auf:
- Ermitteln des Ventilspulenwiderstandes für jede Ventilspule der zumindest zwei Magnetventile der Ventilanordnung,
- Vergleichen des Ventilspulenwiderstandes des ersten Magnetventils mit einem Referenzwert, wobei der Referenzwert aus zumindest einem der ermittelten Ventilspulenwiderstände gebildet wird, und
- Erkennen eines fehlerhaften Magnetventils mittels der Steuereinheit, wenn eine Differenz zwischen dem Ventilspulenwiderstandes des zu prüfenden ersten Magnetventils zu dem Referenzwert einen Schwellwert überschreitet.

Unter einer Ventilanordnung wird eine Anordnung aus zumindest zwei Magnetventilen verstanden, welche insbesondere in einem Fahrwerk verbaut und signaltechnisch mit einer Steuereinheit verbunden sind. Zusätzlich können die Magnetventile mit einer Pumpe verbunden sein, welche über Fluidleitungen Fluid zu den Magnetventilen fördert. Durch das signaltechnische Ansteuern eines Magnetventils mittels der Steuereinheit kann beispielsweise das Dämpfverhalten des Fahrwerks des Fahrzeugs verändert werden, indem Fluid in einen Dämpfer hinein- oder herausgeleitet wird.

Unter einem Magnetventil werden Ventile verstanden, welche durch das Ansteuern eines Elektromagneten betätigt werden. Der Elektromagnet umfasst hierbei eine Ventilspule, die aus einer Vielzahl von Windungen beispielsweise eines Kupferdrahtes gebildet wird. Wird die Ventilspule mit einer Spannung beaufschlagt und es fließt ein Strom durch die Windungen, so wird, wie allgemein bekannt, ein Magnetfeld aufgebaut. Durch dieses Magnetfeld wird ein im Magnetventil befindlicher Anker in Richtung der Ventilspule gezogen. Wird die Spule spannungslos gemacht, so baut sich das Magnetfeld wieder ab und der Anker wird durch eine Feder wieder von der Spule wegbewegt.

Unter einer Ventilspule wird die in einem Magnetventil befindliche Spule verstanden, welche einer Vielzahl von Windungen aus einem elektrischen Leiter, beispielsweise Kupfer, umfasst. Über die Anzahl der Windungen kann die Stärke des durch die Ventilspule erzeugten Magnetfelds verändert werden. Die Ventilspule weist einen Ventilspulenwiderstand auf.

Unter dem Ventilspulenwiderstand wird der ohmsche Widerstand der Ventilspule des Magnetventils verstanden, welcher sich aus dem ohmschen Widerstand des elektrischen Leiters ergibt. Der Ventilspulenwiderstand wird mittels der bekannten Formel R=U/I ermittelt.

Unter einer Steuereinheit wird jede Art von computergestützter Recheneinheit verstanden, die Berechnungen durchführen und/oder Steuerbefehle erzeugen kann. Eine Steuereinheit kann beispielsweise ein High-Performance-Computer oder Mikrocontroller sein.

Unter einem Referenzwert wird ein festgelegter Wert verstanden, welcher für das Vergleichen mit einem ermittelten Wert verwendet wird. Der Referenzwert wird insbesondere aus zumindest einen der ermittelten Ventilspulenwiderstände der zumindest zwei Magnetventile in der Ventilanordnung gebildet.

Unter einem Schwellwert wird ein Grenzwert verstanden, bei dem ein Magnetventil als fehlerhaft detektiert bzw. deklariert wird. Der Schwellwert kann insbesondere einen oberen Schwellwert und einen unteren Schwellwert umfassen. Der obere Schwellwert liegt insbesondere 10 - 20 % oberhalb des ermittelten Referenzwertes. Der untere Schwellwert liegt insbesondere 10 - 20 % unterhalb des ermittelten Referenzwertes.

Der Vorteil der Erfindung liegt darin, dass ein fehlerhaftes Magnetventil der Ventilanordnung des Fahrzeuges selbst dann erkannt werden kann, wenn es bereits in dem Fahrwerk des Fahrzeuges verbaut ist.

Vorzugsweise kann der Referenzwert aus dem Mittelwert aller ermittelten Ventilspulenwiderstände der zumindest zwei Magnetventile der Ventilanordnung gebildet werden. Der Mittelwert entspricht insbesondere dem arithmetischen Mittelwert, wobei alle Ventilspulenwiderstände, ausgenommen dem Ventilspulenwiderstand des ersten Magnetventils, summiert werden und durch die Anzahl der summierten Magnetventile geteilt wird. Dies hat den Vorteil, dass der Referenzwert Fertigungstoleranzen und/oder Umwelteinflüsse berücksichtigt.

Weiterhin kann der Referenzwert der ermittelte Ventilspulenwiderstand eines Magnetventils aus den mehreren Magnetventilen der Ventilanordnung sein, wobei der Referenzwert nicht den Ventilspulenwiderstand des zu prüfenden ersten Magnetventils umfasst. Das eine Magnetventil ist ungleich dem ersten Magnetventil, sodass es insbesondere das zweite Magnetventil ist. Dies hat den Vorteil, dass das der zu prüfende Ventilspulenwiderstand des ersten Magnetventils nur mit Ventilspulenwiderständen der übrigen Magnetventile verglichen wird.

Zudem kann das Vergleichen des Ventilspulenwiderstandes des ersten Magnetventils mit dem Referenzwert sowie das Erkennen des fehlerhaften Magnetventils für alle weiteren Magnetventile der Ventilanordnung, insbesondere nacheinander, durchgeführt werden. Insbesondere kann das Vergleichen und das Erkennen für das zweite Magnetventil durchgeführt werden. Dies hat den Vorteil, dass alle Magnetventile der Ventilanordnung auf deren Funktionalität geprüft werden.

Die Ventilanordnung kann vorzugsweise vier Magnetventile umfassen, wobei für jedes der vier Magnetventile der Ventilspulenwiderstand ermittelt werden kann. Jedes der vier Magnetventile ist mittels eines Kabels signaltechnisch mit der Steuereinheit verbunden, wobei die Steuereinheit Steuersignale zur Steuerung eines jeden Magnetventils an jedes Magnetventil übermitteln kann. Jedes der vier Magnetventile ist in dem Dämpfer des Fahrwerks umfasst. Dies hat den Vorteil, dass jeder Dämpfer des Fahrwerks einzeln individuell in dessen Dämpfung eingestellt werden kann.

Des Weiteren kann der ermittelte Ventilspulenwiderstand des ersten Magnetventils mit den Ventilspulenwiderständen des zweiten Magnetventils und/oder des dritten Magnetventils und/oder des vierten Magnetventils verglichen werden. Das Vergleichen erfolgt insbesondere mittels der Steuereinheit. Das erste Magnetventil ist mittels eines ersten Kabels signaltechnisch mit der Steuereinheit verbunden. Das zweite Magnetventil ist mittels eines zweiten Kabels signaltechnisch mit der Steuereinheit verbunden. Das dritte Magnetventil ist mittels eines dritten Kabels signaltechnisch mit der Steuereinheit verbunden. Das vierte Magnetventil ist mittels eines vierten Kabels signaltechnisch mit der Steuereinheit verbunden. Das Vergleichen kann insbesondere für das zweite Magnetventil, das dritte Magnetventil und das vierte Magnetventil mit den jeweiligen anderen Magnetventilen der Ventilanordnung erfolgen. Dies hat den Vorteil, dass bei dem Vergleichen Umwelteinflüsse und/oder Fertigungstoleranzen eines Magnetventils besser berücksichtigt werden können.

Weiterhin kann die Ventilanordnung acht Magnetventile umfassen, wobei für jedes der acht Magnetventile der Ventilspulenwiderstand ermittelt wird. Jedes der acht Magnetventile ist mittels eines Kabels signaltechnisch mit der Steuereinheit verbunden, wobei die Steuereinheit Steuersignale zur Steuerung eines jeden Magnetventils an jedes Magnetventil übermitteln kann. Jeweils zwei Magnetventile der acht Magnetventile sind in dem Dämpfer des Fahrwerks umfasst. Dies hat den Vorteil, dass jeder Dämpfer des Fahrwerks einzeln individuell in dessen Dämpfung eingestellt werden kann.

Vorzugsweise kann jeder der acht ermittelten Ventilspulenwiderstände mit den anderen Ventilspulenwiderständen verglichen werden. Insbesondere kann der ermittelte Ventilspulenwiderstand des ersten Magnetventils mit den Ventilspulenwiderständen des zweiten Magnetventils und/oder des dritten Magnetventils und/oder des vierten Magnetventils und/oder des fünften Magnetventils und/oder des sechsten Magnetventils und/oder des siebten Magnetventils und/oder des achten Magnetventils verglichen werden. Das erste Magnetventil ist mittels eines ersten Kabels signaltechnisch mit der Steuereinheit verbunden. Das zweite Magnetventil ist mittels eines zweiten Kabels signaltechnisch mit der Steuereinheit verbunden. Das dritte Magnetventil ist mittels eines dritten Kabels signaltechnisch mit der Steuereinheit verbunden. Das vierte Magnetventil ist mittels eines vierten Kabels signaltechnisch mit der Steuereinheit verbunden. Das fünfte Magnetventil ist mittels eines fünften Kabels signaltechnisch mit der Steuereinheit verbunden. Das sechste Magnetventil ist mittels eines sechsten Kabels signaltechnisch mit der Steuereinheit verbunden. Das siebte Magnetventil ist mittels eines siebten Kabels signaltechnisch mit der Steuereinheit verbunden. Das achte Magnetventil ist mittels eines achten Kabels signaltechnisch mit der Steuereinheit verbunden. Das Vergleichen kann insbesondere für das zweite Magnetventil, das dritte Magnetventil, das vierte Magnetventil, das fünfte Magnetventil, das sechste Magnetventil, das siebte Magnetventil und das achte Magnetventil mit den jeweiligen anderen Magnetventilen der Ventilanordnung erfolgen. Dies hat den Vorteil, dass bei dem Vergleichen Umwelteinflüsse und/oder Fertigungstoleranzen eines Magnetventils besser berücksichtigt werden können.

Des Weiteren kann das Ermitteln und Vergleichen der Ventilspulenwiderstände sowie das Erkennen fehlerhafter Magnetventile während eines Startvorgangs des Fahrzeugs stattfinden. Der Startvorgang des Fahrzeugs ist insbesondere ein erstmaliges Hochfahren von Systemen des Fahrzeugs, welcher eine zeitliche Phase des Stillstandes des Fahrzeugs vorausgegangen ist, beispielsweise nachdem das Fahrzeug über Nacht in einer Garage geparkt wurde und am nächsten Morgen gestartet wird. Der Startvorgang wird insbesondere durch ein Betätigen einer Startvorrichtung, beispielsweise eines Start-Stopp-Knopfes oder einer Zündung, gestartet. Dies hat den Vorteil, dass das Ermitteln der Ventilspulenwiderstände, das Vergleichen sowie das Ermitteln eines fehlerhaften Magnetventils mit größerer Genauigkeit erfolgt.

Weitere Vorteile und Merkmale ergeben sich aus der nachfolgenden Beschreibung in Verbindung mit den beigefügten Zeichnungen. In diesen zeigen:

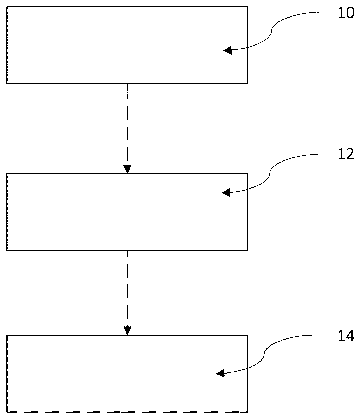

- Figur 1: Flussdiagramm des Verfahrens zur Fehlererkennung für eine Ventilanordnung aus mehreren Magnetventilen in einem Fahrzeug vorgesehen;

Magnetventile finden in vielen Bereichen Anwendung, bei denen Fluide zu Verbrauchern hin oder weg gefördert werden müssen. Ein Anwendungsfall ist in einem Fahrwerk eines Fahrzeugs, insbesondere in Dämpfern des Fahrwerks. Hierbei werden die Magnetventile in den Dämpfern zum Einstellen des Dämpfverhaltens des Fahrwerks eingesetzt. Jedes der vier Magnetventile ist mit einer Steuereinheit signaltechnisch verbunden.

In einem Ausführungsbeispiel umfasst das Fahrzeug vier Magnetventile, wobei je ein Magnetventil in einem Dämpfer umfasst ist. Der Dämpfer umfasst einen Zylinder, in dem das Fluid umfasst ist, sowie einen in dem Zylinder beweglich angeordneten Kolben. Der Kolben ragt auf einer ersten Seite des Zylinders heraus und umfasst eine erste Befestigungsvorrichtung, welche beispielsweise an einer Karosserie montiert ist. Der Zylinder ist auf einer der ersten Seite gegenüberliegenden zweiten Seite mittels einer zweiten Befestigungsvorrichtung beispielsweise an einem Rad bzw. einer Radaufhängung montiert. Wird beispielsweise aufgrund eines Schlaglochs ein Stoß auf das Rad ausgeübt, so bewegt sich der Zylinder in Richtung der ersten Befestigungsvorrichtung. Dabei wird über die Magnetventile Fluid, insbesondere Öl, von einer ersten Kammer in eine zweite Kammer gedrückt. Durch die Bewegung des Kolbens in dem Fluid wird der Stoß in Wärme umgewandelt. Soll das Fahrwerk eine stärkere Dämpfung aufweisen, so wird ein Durchfluss des Fluids durch das Magnetventil begrenzt oder vollständig unterbunden. Durch das vollständige Schließen des Magnetventils in dem Dämpfer ist die Durchflussmenge des Fluids im Wesentlichen gleich Null, womit der Austausch des Fluids von der ersten Kammer zur zweiten Kammer begrenzt wird. In dem geschlossenen Zustand weist die Dämpfung die größte Wirkung, also ein hartes Verhalten, auf. Durch ein teilweises Öffnen des Magnetventils wird die Durchflussmenge des Fluids erhöht. Bei einem vollständigen Öffnen des Magnetventils ist die Durchflussmenge des Fluids am größten, weshalb die Dämpfung in diesem Zustand die geringste Wirkung, also ein weiches Verhalten, aufweist.

Das Öffnen des Magnetventils erfolgt über die Ventilspule. Die Ventilspule wird mit einem Strom beaufschlagt und erzeugt ein Magnetfeld, welches einen in dem Magnetventil befindlichen Anker in Richtung der Ventilspule zieht. Ist die Ventilspule nicht mit Strom beaufschlagt, so wird der Anker durch eine Feder in seine Ausgangsposition bewegt, welche dem geschlossenen Zustand entspricht. Ist die Ventilspule mit maximalem Strom beaufschlagt, so wird der Anker vollständig in Richtung Ventilspule ausgelenkt und befindet sich im vollständig geöffneten Zustand. Wird die Ventilspule mit einem Strom zwischen Null und Maximalstrom beaufschlagt, so wird der Anker entsprechend zwischen dem geschlossenen Zustand und dem vollständig geöffneten Zustand ausgelenkt.

Die Ventilspule weist einen Ventilspulenwiderstand auf. Der Ventilspulenwiderstand kann aufgrund von Umwelteinflüssen und/oder Alterungseffekten abnehmen, weshalb sich die Magnetfeldstärke der Ventilspule verringert und ggf. der Anker durch die Ventilspule nicht in die gewünschte Position ausgelenkt wird. Sobald das Magnetventil den Anker mittels der Ventilspule beispielsweise nicht mehr vollständig auslenken kann, ist das Magnetventil fehlerhaft. Beispielsweise müsste der gesamte Dämpfer ausgetauscht werden, damit das Fahrwerk wieder seine volle Funktion aufweist.

In Figur 1 ist ein Verfahren zur Erkennung eines fehlerhaften Magnetventils dargestellt. Der Fahrer des Fahrzeugs startet das Fahrzeug durch Betätigen der Zündung, beispielsweise eines Start-Stopp-Knopfes. Nach dem Start beginnt die Steuereinheit in einem ersten Schritt die Ermittlung 10 der Ventilspulenwiderstände der Ventilspulen der vier Magnetventile. Nachdem der Ventilspulenwiderstand für das erste Magnetventil, das zweite Magnetventil, das dritte Magnetventil und das vierte Magnetventil ermittelt wurde, können die ermittelten Ventilspulenwiderstände beispielsweise in einer Speichereinheit gespeichert werden. Das erste Magnetventil, das zweite Magnetventil, das dritte Magnetventil und das vierte Magnetventil ist jeweils mit zumindest einer Leitung signaltechnisch mit der Steuereinheit verbunden.

**In** einem zweiten Schritt führt die Steuereinheit einen Vergleich 12 des Ventilspulenwiderstand des ersten Magnetventils zunächst mit dem Ventilspulenwiderstand des zweiten Magnetventils durch, wobei der Ventilspulenwiderstand des zweiten Magnetventils als Referenzwert dient. Weicht der Ventilspulenwiderstand des ersten Magnetventils von dem Ventilspulenwiderstand des zweiten Magnetventils ab, beispielsweise um 10 %, so findet durch die Steuereinheit ein Erkennen 14 des ersten Magnetventil als fehlerhaft statt. Die Abweichung von beispielsweise 10 % ist hierbei der Schwellwert, welcher auf den Referenzwert bezogen ist.

Wird der Schwellwert beim Vergleich des Ventilspulenwiderstand des ersten Magnetventils mit dem Ventilspulenwiderstand des zweiten Magnetventils nicht überschritten, so vergleicht die Steuereinheit den Ventilspulenwiderstand des ersten Magnetventils mit dem Ventilspulenwiderstand des dritten Magnetventils. Weicht der Ventilspulenwiderstand des ersten Magnetventils von dem Ventilspulenwiderstand des dritten Magnetventils ab, beispielsweise um 10 %, so erkennt die Steuereinheit das erste Magnetventil als fehlerhaft an.

Wird der Schwellwert beim Vergleich des Ventilspulenwiderstand des ersten Magnetventils mit dem Ventilspulenwiderstand des dritten Magnetventils nicht überschritten, so vergleicht die Steuereinheit den Ventilspulenwiderstand des ersten Magnetventils mit dem Ventilspulenwiderstand des vierten Magnetventils. Weicht der Ventilspulenwiderstand des ersten Magnetventils von dem Ventilspulenwiderstand des vierten Magnetventils ab, beispielsweise um 10 %, so erkennt die Steuereinheit das erste Magnetventil als fehlerhaft an.

Wird der Schwellwert beim Vergleich des Ventilspulenwiderstand des ersten Magnetventils mit den Ventilspulenwiderständen des zweite Magnetventils, des dritten Magnetventils und des vierten Magnetventils nicht überschritten, so ist das erste Magnetventil funktionsfähig bzw. nicht fehlerhaft.

Danach beginnt die Steuereinheit das Vergleichen des Ventilspulenwiderstandes des zweiten Magnetventils mit den Ventilspulenwiderständen des ersten Magnetventils, des dritten Magnetventils und des vierten Magnetventils. Die Schritte des Vergleichens der Ventilspulenwiderstände und das Erkennen eines fehlerhaften Magnetventils sind hier entsprechend wie zuvor erläutert anzuwenden.

Das Vergleichen der Ventilspulenwiderstände sowie das Erkennen eines fehlerhaften Magnetventils wird für das erste Magnetventil, das zweite Magnetventil, das dritte Magnetventil und das vierte Magnetventil nacheinander durchgeführt.

In einem weiteren Ausführungsbeispiel sind die zuvor genannten Schritte identisch. Lediglich dient als Referenzwert der Mittelwert der verbleibenden Magnetventile, mit denen das erste Magnetventil verglichen wird. Wird das erste Magnetventil mit dem zweiten Magnetventil, dem dritten Magnetventil und dem vierte Magnetventil verglichen, so ist der Referenzwert der Mittelwert aus den Ventilspulenwiderständen des zweiten Magnetventils, des dritten Magnetventils und des vierten Magnetventils.

Wird das zweite Magnetventil mit dem ersten Magnetventil, dem dritten Magnetventil und dem vierte Magnetventil verglichen, so ist der Referenzwert der Mittelwert aus den Ventilspulenwiderständen des ersten Magnetventils, des dritten Magnetventils und des vierten Magnetventils.

Das zuvor erläuterte ist beim Durchführen der Verfahrensschritte auf das dritte Magnetventil sowie das vierte Magnetventil anzuwenden.

In einem weiteren Ausführungsbeispiel umfasst das Fahrzeug acht Magnetventile, wobei zwei Magnetventile in einem Dämpfer umfasst sind. Wie im ersten Ausführungsbeispiel erläutert, startet der Fahrer des Fahrzeugs das Fahrzeug durch Betätigen der Zündung, beispielsweise eines Start-Stopp-Knopfes. Nach dem Start beginnt die Steuereinheit in einem ersten Schritt die Ventilspulenwiderstände der Ventilspulen der acht Magnetventile zu ermitteln. Nach dem Start des Fahrzeugs werden die Ventilspulenwiderstände für das erste Magnetventil, das zweite Magnetventil, das dritte Magnetventil, das vierte Magnetventil, das fünfte Magnetventil, das sechste Magnetventil, das siebte Magnetventil und das achte Magnetventil ermittelt. Die ermittelten Ventilspulenwiderstände können beispielsweise in einer Speichereinheit gespeichert werden. Das erste Magnetventil, das zweite Magnetventil, das dritte Magnetventil, das vierte Magnetventil, das fünfte Magnetventil, das sechste Magnetventil, das siebte Magnetventil und das achte Magnetventil ist jeweils mit zumindest einer Leitung signaltechnisch mit der Steuereinheit verbunden.

In dem zweiten Schritt vergleicht die Steuereinheit den Ventilspulenwiderstand des ersten Magnetventils zunächst mit dem Ventilspulenwiderstand des zweiten Magnetventils, wie in dem zuvor erläuterten Beispiel. Der Ventilspulenwiderstand des zweiten Magnetventils dient auch hier als Referenzwert.

In einem dritten Schritt ermittelt die Steuereinheit eine Differenz zwischen dem Ventilspulenwiderstand des ersten Magnetventils und dem Ventilspulenwiderstand des zweiten Magnetventils. Überschreitet die Differenz einen Schwellwert, beispielsweise 10 % ab, so erkennt die Steuereinheit das erste Magnetventil als fehlerhaft.

Der zweite Schritt und der dritte Schritt werden für das dritte Magnetventil, das vierte Magnetventil, das fünfte Magnetventil, das sechste Magnetventil, das siebte Magnetventil und das achte Magnetventil ebenso durchgeführt. Wird beim Vergleichen des Ventilspulenwiderstandes des ersten Magnetventils mit den anderen Ventilspulenwiderständen der verbleibenden Magnetventile der Schwellwert überschritten, so wird das erste Magnetventil von der Steuereinheit als nicht funktionsfähig bzw. fehlerhaft bestimmt. Wird bei allen Vergleichen des Ventilspulenwiderstandes des ersten Magnetventils mit den anderen Ventilspulenwiderständen der verbleibenden Magnetventile nicht überschritten, so ist das erste Magnetventil funktionsfähig bzw. nicht fehlerhaft.

In einem weiteren Ausführungsbeispiel sind die zuvor genannten Schritte identisch. Lediglich dient als Referenzwert der Mittelwert der verbleibenden Magnetventile, mit denen das erste Magnetventil verglichen wird. Wird das erste Magnetventil mit dem zweiten Magnetventil, dem dritten Magnetventil, dem vierte Magnetventil, dem fünften Magnetventil, dem sechsten Magnetventil, dem siebten Magnetventil und dem achten Magnetventil verglichen, so ist der Referenzwert der Mittelwert aus den Ventilspulenwiderständen des zweiten Magnetventils, des dritten Magnetventils, des vierten Magnetventils, des fünften Magnetventils, des sechsten Magnetventils, des siebten Magnetventils und des achten Magnetventils.

Wird das zweite Magnetventil mit dem ersten Magnetventil, dem dritten Magnetventil, dem vierte Magnetventil, dem fünften Magnetventil, dem sechsten Magnetventil, dem siebten Magnetventil und dem achten Magnetventil verglichen, so ist der Referenzwert der Mittelwert aus den Ventilspulenwiderständen des ersten Magnetventils, des dritten Magnetventils, des vierten Magnetventils, des fünften Magnetventils, des sechsten Magnetventils, des siebten Magnetventils und des achten Magnetventils.

Das zuvor erläuterte ist beim Durchführen der Verfahrensschritte auf das dritte Magnetventil, das vierte Magnetventil, das fünfte Magnetventil, das sechste Magnetventil, das siebte Magnetventil und das achte Magnetventil anzuwenden.

In einem weiteren Ausführungsbeispiel können die Schritte wie folgt durchgeführt werden.
- Ermitteln der Ventilspulenwiderstände aller Magnetventile der Ventilanordnung;
- Ordnen der ermittelten Ventilspulenwiderstände;
- Vergleichen der ermittelten Ventilspulenwiderstände miteinander, wobei ein Koeffizient aus zwei gemessenen Ventilspulenwiderständen für den Vergleich gebildet wird;
- Magnetventile funktionsfähig, wenn der Koeffizient größer einem Schwellwert;
- Magnetventile nicht funktionsfähig, wenn der Koeffizient kleiner dem Schwellwert, so beginnt Vergleich von neuem, wobei einmal der Vergleich ohne den größten ermittelten Ventilspulenwiderstand und einmal ohne den kleinsten ermittelten Ventilspulenwiderstand erfolgt;
- Restlichen Magnetventile funktionsfähig, wenn Koeffizient größer dem Schwellwert und bei Vergleich weggelassenes Magnetventil nicht funktionsfähig

Das Ermitteln der Ventilspulenwiderstände erfolgt in bekannter Weise.

Das anschließende Ordnen der ermittelten Ventilspulenwiderstände erfolgt vorzugsweise mittels der Steuereinheit. Die Ventilspulenwiderstände können beispielsweise in aufsteigender Reihenfolge der ermittelten Werte geordnet werden.

Beim Vergleichen werden der größte ermittelte Ventilspulenwiderstand mit dem kleinsten ermittelten Ventilspulenwiderstand verglichen, indem ein Koeffizient aus diesen beiden Werten gebildet wird. Der Koeffizient ist der Quotient von dem kleinsten ermittelten Ventilspulenwiderstand geteilt durch den größten ermittelten Ventilspulenwiderstand. Nähert sich der Koeffizient dem Wert Null an, so liegen die beiden Ventilspulenwiderstande weit auseinander. Nähert sich der Koeffizient dem Wert Eins an, so sind die beiden Ventilspulenwiderstände ähnlich bzw. im Wesentlichen gleich.

Alle Magnetventile der Ventilanordnung werden als funktionsfähig erkannt, wenn der ermittelte Koeffizient größer einem Schwellwert ist. Der Schwellwert kann beispielsweise zwischen 0,7 und 1,0 liegen.

Ist der ermittelte Koeffizient unterhalb des Schwellwertes, so wird ein neuer Koeffizient ermittelt. Bei der Ermittlung des neuen Koeffizienten wird zunächst der größte ermittelte Ventilspulenwiderstand und anschließend der kleinste ermittelte Ventilspulenwiderstand weggelassen. Dadurch wird der nächstgrößere bzw. nächstkleinere Ventilspulenwiderstand für die Ermittlung des neuen Koeffizienten herangezogen. Wird bei dem Ausführungsbeispiel mit vier Magnetventilen der größte ermittelte Ventilspulenwiderstand weggelassen, verbleiben drei Magnetventile, bei dem das Magnetventil mit dem kleinsten ermittelten Ventilspulenwiderstand umfasst ist. Hier wird wie zuvor beschrieben der neue Koeffizient gebildet. Anschließend wird der größte Ventilspulenwiderstand zur Ermittlung des neuen Koeffizienten hinzugefügt und der kleinste Ventilspulenwiderstand weggelassen. Somit wird der neue Koeffizient für drei Magnetventile gebildet, welche den größten ermittelten Ventilspulenwiderstand umfassen.

Liegt der Ventilspulenwiderstand über dem neuen Koeffizienten, so sind die verbleibenden Magnetventile funktionsfähig. Das nicht bei der Bildung des neuen Koeffizienten berücksichtigte bzw. weggelassene Magnetventil, also entweder das mit dem größten oder kleinsten ermittelten Ventilspulenwiderstand, ist entsprechend nicht funktionsfähig.

### Bezugszeichen:

- 10: Ermitteln d. Ventilspulenwiderstände
- 12: Vergleich d. Ventilspulenwiderstände
- 14: Erkennen d. fehlerhaften Magnetventils

## Patentansprüche

1. Verfahren zur Fehlererkennung für eine Ventilanordnung aus mehreren Magnetventilen in einem Fahrzeug,
wobei die Ventilanordnung zumindest zwei Magnetventile umfasst, wobei jedes Magnetventil eine Ventilspule mit einem Ventilspulenwiderstand aufweist,
wobei die Ventilanordnung mit einer Steuereinheit zur Steuerung der Magnetventile signaltechnisch verbunden ist,
aufweisend folgende Schritte:
a. Ermitteln des Ventilspulenwiderstandes (10) für jede Ventilspule der zumindest zwei Magnetventile der Ventilanordnung,
b. Vergleichen des Ventilspulenwiderstandes (12) des ersten Magnetventils mit einem Referenzwert, wobei der Referenzwert aus zumindest einem der ermittelten Ventilspulenwiderstände gebildet wird, und
c. Erkennen eines fehlerhaften Magnetventils (14) mittels der Steuereinheit, wenn eine Differenz zwischen dem Ventilspulenwiderstandes des zu prüfenden ersten Magnetventils zu dem Referenzwert einen Schwellwert überschreitet.

2. Verfahren nach Anspruch 1, **dadurch gekennzeichnet, dass** der Referenzwert aus dem Mittelwert aller ermittelten Ventilspulenwiderstände der zumindest zwei Magnetventile der Ventilanordnung gebildet wird.

3. Verfahren nach Anspruch 1 oder 2, **dadurch gekennzeichnet, dass** der Referenzwert der ermittelte Ventilspulenwiderstand eines Magnetventils aus den mehreren Magnetventilen der Ventilanordnung ist, wobei der Referenzwert nicht den ermittelten Ventilspulenwiderstand des zu prüfenden ersten Magnetventils umfasst.

4. Verfahren nach einem der vorhergehenden Ansprüche, **dadurch gekennzeichnet, dass** das Vergleichen der Ventilspulenwiderstände mit dem Referenzwert sowie das Erkennen des fehlerhaften Magnetventils für alle Magnetventile der Ventilanordnung, insbesondere nacheinander, durchgeführt wird.

5. Verfahren nach einem der vorhergehenden Ansprüche, **dadurch gekennzeichnet, dass** die Ventilanordnung vier Magnetventile umfasst, wobei für jedes der vier Magnetventile der Ventilspulenwiderstand ermittelt wird.

6. Verfahren nach einem der vorhergehenden Ansprüche, **dadurch gekennzeichnet, dass** der ermittelte Ventilspulenwiderstand des ersten Magnetventils mit den Ventilspulenwiderständen des zweiten Magnetventils und/oder des dritten Magnetventils und/oder des vierten Magnetventils verglichen wird.

7. Verfahren nach einem der vorhergehenden Ansprüche, **dadurch gekennzeichnet, dass** die Ventilanordnung acht Magnetventile umfasst, wobei für jedes der acht Magnetventile der Ventilspulenwiderstand ermittelt wird.

8. Verfahren nach Anspruch 7, **dadurch gekennzeichnet, dass** jeder der acht ermittelten Ventilspulenwiderstände mit den anderen Ventilspulenwiderständen verglichen wird.

9. Verfahren nach einem der vorhergehenden Ansprüche, **dadurch gekennzeichnet, dass** das Ermitteln und Vergleichen der Ventilspulenwiderstände sowie das Erkennen fehlerhafter Magnetventile während eines Startvorgangs des Fahrzeugs stattfindet.
